# EUROPEAN PATENT APPLICATION

(11) **EP 1 918 031 A1**
(43) Date of publication of application: **07.05.2008**
(21) Application number: 06022604.0
(22) Date of filing: 30.10.2006
(51) Int. Cl.: B09B 3/00, C04B 18/02, C03B 5/00

(54) **Method of detoxification and utilization of fly ash**

(71) Applicant: ASH DEC Umwelt AG, 1210 Wien (AT)
(72) Inventor: Prof.Dr. Boutoussov, Mikhail, 1190 Vienna (AT)
(74) Representative: Wildhack, Helmut

(57) **Abstract**

The invention relates to a method of detoxification and inertisation of ashes containing heavy metals, especially fly ash, from incineration and gasification of municipal waste, industrial waste or sludge, by providing a mixture of
- the ashes to be treated,
- optionally a fine-grained matrix-forming material (additive 1), suitable for generating a hard, resistant and durable matrix in the final product when treated according to these steps,
- an enhancer material (additive 2) undergoing an exothermic reaction when heated, especially an organic fuel (additive 2),
- and a chlorine source (additive 3) creating free chlorine atoms when heated,
then agglomerating, pelletizing or compacting, especially granulating, said mixture and finally heating the obtained granules/pellets to a temperature above the temperature when the vapor pressure of the heavy metal chlorides exceeds 0,001 bar, especially to a temperature above 500°C, especially above 700°C.

## Description

The invention relates to a method for detoxification and inertisation of ashes containing heavy metals according to claim 1.

From AT 410 288 a method of effective inertisation of toxic material is known - a fly ash waste incineration, by converting this volatile powder into a granulated material in form of glass-ceramic granules. In these granules, the level of leachability (washing out) of the main toxic component of the ash, i.e. heavy metals, is strongly reduced by means of transforming the heavy metals containing substances from the water soluble form, such as chlorides, other salts and some oxides into a more water resistant form, such as alumosilicates and similar non- or less soluble substances. The solubility of most heavy metals from the ashes treated by this method was below the requirements for disposal of inert materials.

This method according to AT 410 288 provides a process of ash treatment that is environmentally superior to other methods, such as direct ash disposal in the landfills and cement solidification, both of which were often used previously. These two latter methods were found environmentally unsafe and thus were legally abandoned recently in many countries.

The method according to AT 410 288 also became more attractive economically than another current alternative i.e. processes related to direct ash melting. Such processes are environmentally secure but rather expensive. Processing costs rendered by the process according to AT 410 288 ranged from € 90 to €100 whereas the costs of vitrification by direct melting are between € 200 and € 300 per ton of treated ash.

However, environmental legislation in such countries as Austria and Switzerland requires that not only the leachability of heavy metals (ELUAT parameters) but also the internal concentration of heavy metals in the treated ash (or resulting products) should be kept below very stringent limits. The method according to AT 410 288 did not facilitate reduction of the heavy metals' concentration in the produced granules to the necessary levels.

**Table 1. Properties of typical mixed ash taken from the city incinerator and the granules produced by the AT 410 288 method from this ash mix.**

| Heavy metal | ELUAT for inert materials (mg/l) | ELUAT from granules (mg/l) | Concentration for inert material (mg/kg) | Concentration in granules (mg/kg) |
|---|---|---|---|---|
| Cu | 2.0 | 0.9 | 500 | 603 |
| Zn | 10.0 | 10.0 | 1,000,000 | 1,460,000 |
| Pb | 1.0 | 0.01 | 500 | 2,200,00 |
| Cd | 0.1 | 0.1 | 10 | 23 |

In the meantime, prohibition of cement solidification and direct landfilling on one side and high costs of the ash melting methods, on the other, has driven many companies involved into management of incineration residues, to opt for dumping the cement-immobilized ash into several exhausted salt mines and some other underground cavities. This method, whatever dubious and short-ranged could it be seen by many specialists, offered an attractive price alternative between €70 and €90 per ton of disposed ash and became rather popular in some European countries like Germany, Austria and Switzerland.

The **object** of the proposed invention is to overcome the above mentioned shortcomings specific to the AT 410 288 technology and to all current competitors and to increase the quality of the final product received. It is a further object of the invention to efficiently treat ashes from different sources with different compositions with a high heavy metal content and to separate the heavy metals from the ashes and/or to reduce their leachability.

This problem is solved with the method according to claim 1.

With this method it is possible to extract and separate a portion of the heavy metals from the treated ash during the processing cycle. The remaining heavy metals are immobilized, inertisized and "trapped" within the ceramic matrix of the resulting granules. The very strict limits of environmental legislation, requiring that not only the leachability of heavy metals but also the internal concentration of heavy metals in the treated ash or in the resulting products, can therefore be fulfilled.

Furthermore the specific weight of the pellets is reduced by 20-30% which is convenient for any further use of pellets, for example as a component of building materials.

As a major economic advantage the ash processing costs are reduced to the competitive level of € 70-90 per one ton of treated ash.

The method is advantageously substantiated by the features of the dependant claims.

The claimed method is suitable and advantageous for treatment of ashes with high contents of heavy metals like Cu, Zn, Pb, Cd, Cr etc. The method aims at detoxifying and inertisizing said ashes.

As the ashes to be treated predominately ashes, especially fly ash, from incineration and gasification of municipal waste, industrial waste or sludge resulting from purification of municipal or agricultural sewage streams, or from incineration of municipal and industrial waste, or mixtures thereof are used.

Depending on their origin, ashes from different sources can contain different amounts of elements and compounds and their compositions can vary substantially. For example the content of aluminum strongly depends on the origin of the ash, especially whether cans or packaging material made of aluminium have been separated before incineration or not.

Therefore it is advisable to analyze the ashes and get information on their composition in order to adapt the process accordingly.

The method is carried out by provision of a mixture of the ashes to be treated, further of an enhancer material (additive 2) and of a chlorine source (additive 3).

The enhancer material (additive 2) is a substance that undergoes an exothermic reaction, e.g. combusts, when heated, especially an organic fuel. As enhancer material or organic fuel (additive 2) low-calorific natural fuels, coal powders, sawdust, granulated water purification sludge and/or fine-milled waste containing polyvinylchloride (PVC) can be used.

The chlorine source (additive 3) is a compound that creates free chlorine atoms when heated to a certain temperature. As chlorine source (additive 3) metal chlorides, especially environmentally compatible metal chlorides, especially alkali metal- and/or earth alkali metal-chlorides, especially NaCl, CaCl₂, KCI or MgCl₂, can be used. Also a powder and/or a concentrated solution of industrial waste containing NaCl, KCI, MgCl₂, CaCl₂ or an arbitrary mixture of materials mentioned above can be used.

The enhancer material (additive 2) can advantageously also act as chlorine source (additive 3) simultaneously. If, for example, polyvinylchloride (PVC) or waste containing PVC is added to the ashes, polyvinylchloride (PVC) acts as enhancer material (additive 2) on the one hand and as chlorine source (additive 3) on the other hand as well. Also other chlorine containing polymers that combust at the defined temperatures can be used.

Optionally depending on the composition of the ashes a fine-grained matrix-forming material (additive 1) can be added. This additive is suitable for generating a hard, resistant and durable glasslike matrix in the final product when treated according to the method. Ashes with an inherent high aluminium and silicium content might not essentially require a further addition of the matrix-forming material (additive 1).

The matrix forming material (additive 1) contains sufficient amounts of aluminum and silicium. Especially it contains or consists of aluminum oxide Al₂O₃ and silicium oxide SiO₂, especially aluminum silicates or alumosilicates, natural clay and/or powder from milling of different types of construction waste or an arbitrary mixture of such powders. The matrix forming material (additive 1) must be suitable for forming a glasslike ceramic matrix.

The matrix forming material (additive 1) is advantageously added to the ashes in such an amount that the overall content of all matrix forming materials in the final product, e.g. silicium and aluminium containing compounds, alumosilicates etc., is below 15 wt.% of the final product. Thereby a matrix with good physical properties is generated allowing for an effective treatment of the ash.

In order to obtain additional properties of the final product such as lower specific weight and/or bulk weight, lower sound permeability or enhanced sound proof properties etc., the matrix-forming material (additive 1) and/or the enhancer material (additive 2) consists of or is blended with materials increasing the porosity of the final product after thermal treatment, e.g. substances that form or release gases when heated.

The ashes, the matrix-forming material (additive 1), the enhancer material (additive 2) and/or the chlorine source (additive 3) are provided either as fine-grained or milled dry powders or as watery suspensions or solutions. Their average particle size should advantageously be kept < 500 µm for the ashes and < 1000 µm for the additives.

This mixing step of the ashes and the additives 1, 2, 3 is advantageously performed at temperatures between 15 and 50° C.

An especially advantageous mixture can be provided by mixing 60 - 70 wt.% of the ashes to be treated, 0 - 15 wt.% of the matrix-forming material (additive 1), 5 - 15 wt.% of the enhancer material (additive 2) and 0 - 10 wt.% of the chlorine source (additive 3). The mixture is effected in an arbitrary order. This dry mixture is then blended with additional 10 - 20 wt.% of water to form a homogenous fine-granular mass. The given wt.% are related to the weight of the dry mix.

Said mixture is then agglomerated or compacted, especially granulated to spherical granules or pelletized. By this treatment the so called "green" granulate is obtained. This agglomeration step is continued until an average diameter of the granulates/pellets predetermined by the designated future applications, especially in the range of 3 to 30 mm is reached. The size of the granules is thereby defined by their future utilization.

Optionally an additional drying step can be introduced after the agglomeration step, especially to reduce the residual dryness of the granules to 1-5%.

Finally the obtained "green" granules/pellets are heated to a temperature above the temperature when the vapor pressure of the heavy metal chlorides exceeds 0,001 bar, especially to a temperature above 500°C, especially above 700°C, depending on the type of heavy metals. By this treatment the sintered alumosilicate-matrix is generated, trapping and inertizising the remaining heavy metals and generating a stable support structure of the granules.

The thermal treatment step can be extended and can include additional annealing of the granulates at elevated temperatures, e.g. of above 700°C, until the enhancer material or the organic fuel (additive 2) is completely combusted.

The thermal treatment of the granules/pellets can be conducted in one single step or effected in two stages, especially in two separate reactors, wherein the temperature in the first stage is held, especially constant, below 120°C for a certain time. Then in a second stage the temperature is raised to a temperature above 500°C, especially 700°C, and is held, especially constant, again for a certain time.

After this thermal treatment an additional cooling step can be introduced in order to achieve additional mechanical stability of granules.

### The efficiency of the claimed method can be explained as follows:

At temperatures above 500°C to 700°C the enhancer material or organic fuel (additive 2) dispersed inside the heated granules ignites and starts burning under conditions of the oxygen deficiency thus resulting in creation, within the granules, of the local reductive atmosphere whereby some of the heavy metals-containing compounds are reduced into the basic metal form.

The chlorine source (additive 3) and, in case of using the PVC-based fuel as additive 2 also vinyl-chlorides from this additive, decomposes inside the granules with creation of free chlorine atoms which react with heavy metals compounds and create volatile chlorides of these metals.

Vapors of the chlorides of the heavy metals start diffusing outside from the interior of granules and evaporating.

In the predominantly oxidizing conditions outside the pellets the evaporated metals are transformed into volatile metal-oxide particles and removed, together with chlorides, by the regulated air stream from the heating zone.

Combustion of the organic fuel (additive 2) inside the granules increases the internal temperature within each granule and allows to very effectively substitute a part of the energy that is needed to enhance extraction of the heavy metals and to create the ceramic matrix and is otherwise provided by the external heating device.

The internal heating inside and throughout the granule volume caused by the combustion increases the size of internal pores that are otherwise created by evaporation of residual water and decomposition of chlorides, thus helping to reduce the specific weight of pellets.

**Table 4. Dependence of the bulk weight of the granulate on the processing temperature (external diameter unchanged)**

| | | | | |
|---|---|---|---|---|
| Treatment temperature °C | 800 | 850 | 920 | 1000 |
| Bulk weight (t/m 3) | 0,85 | 0,8 | 0,72 | 0,62 |

### The claimed method also has a number of economic advantages:

As enhancer material (additive 2) admixed to the green granules, one can use not only the standard cheap products, such as brown coal powder, but also the industrial waste such as sawdust, granulated water purification sludge or fine-milled PVC-based waste. This waste can be collected at certain collection fee thus reducing the overall processing costs by € 5-10.

The combustion of the dispersed enhancer material or fuel (additive 2) allows to substitute a part of the externally applied energy provided by the heating device with the internal combustion energy. With a specific calorific value of 2.9 Gcal/ton, dried water purification sludge in the amount of 60 kg added to 940 kg of the mix between the dry ash and aluminum silicate additive (additive 1) (about 5 wt. % in the mixing formula claimed by the invention), allows to release about 0.170 Gcal which is about 50% of the required energy needed to initiate chemical reactions and create the ceramic matrix inside the pellets. Since energy consumption constitutes about 40% of the operational costs, this measure allows to reduce energy costs by € 20 per ton of treated ash.

Introduction of a partially reductive atmosphere inside the heated pellets allows to reduce the operational temperatures at which necessary thermal processes initiate, from 870-950° C, to 700-750° C, i.e. by about 200° C. It is caused by the fact that pure metals tend to evaporate at lower temperatures than their oxides. The possibility to decrease the operational temperature of the heating device by 200° C allows to additionally save about 20% of energy costs which is in the range of € 10 per ton.

As a silica-aluminium-rich additive (additive 1) also industrial waste can be used, for example milled construction waste, opening the opportunity of further reduction of the operational costs, by € 3-5/ ton.

Altogether, the decrease in the operational costs from € 90-100/ ton to about € 55-65/ton of treated ash makes the proposed invention competitive with the major competitor namely the underground disposal technique.

Finally, since the granules produced by the claimed method fulfil the legal requirements for both leachability and concentration of heavy metals, they can be upgraded from the class of waste to the class of products and find their industrial use as a recycled material.

It allows the operators of incineration facilities to withdraw from their dependence upon the questionable underground disposal method (for example the underground disposal of non-vitrified radioactive waste was forbidden long ago by the directives of IAEA), and opens an opportunity of waste recycling, i.e. returning part of industrial waste back to the productive cycle.

As a concrete realization example it is referred to the results of semi-industrial tests (i.e. with productivity > 150 kg of the final product per hour). These tests were performed at the gas-fired multi-hearth furnace belonging to company Schaefer GmbH in Frankfurt. The trial cycle continued 5 full days and included the following procedures:
1. Control of the process parameters such as heating gas temperature, granulate temperature on all 8 hearths of the furnace; removal of dust and gas components from each hearth, extraction of heavy metals in the exhaust gas and dust stream etc.
2. Material control- parameters of green granules as well as granule probes extracted from different hearths and of the final product.

Due to high costs of such semi-industrial tests, earlier multiple tests on a "small scale" equipment were performed that included treatment in the rotary kilns with productivity of 10 and 50 kg/hour. By these tests, optimal conditions of granulate preparation and treatment in conjunction with the claimed invention were specified.

During the semi-industrial tests, production of the granulate was executed in compliance with the claimed invention with the following initial parameters:
Test 1 (reference) - without organic additive: 70% of ash from Fernwärme Wien, 20% of clay from Aspang resource, 10% of MgCl₂
Test 2 (verification) - with organic additive: 70% ash of the same origin, 5% clay from the same origin, 10% MgCl₂, 15% of organic fuel e.g. dried water purification sludge.

In both cases the weight rates are provided with calculation to the dry weight of every component.

Gas heating was applied at the hearths 2,4,6. Intensity of the gas supply was providing by such heating conditions that the temperature of the inert granules (test 1) was around 800°C. Granules on the hearth 1 were dried by convection from the hearths beneath. Hearths 7 and 8 were used for gradual cooling of granules.

During test 2, in view of exothermic processes caused by combustion of the organic fuel inside the granules, the gas supply to the hearth 6 was reduced by 50%, thus providing the immediate reduction of consumed energy in the furnace, by 16%.

Total residence time for granulate on hearths 2-6 was 30 min.

Each test was conducted during 10 hours, thus allowing to produce about 1000 kg of final material in each test. Parameters of process and granulate were measured regularly, so that the data provided below correspond to average values.

From the abundance of data received, the following are of immediate interest for the claimed invention:

**Table 2. Distribution of material temperatures at different hearths**

| Hearth N | 2 | 3 | 4 | 5 | 6 | 7 |
|---|---|---|---|---|---|---|
| Average temperature, °C, test 1 | 520 | 730 | 800 | 828 | 848 | 836 |
| Average temperature, °C, test 2 | 660 | 833 | 949 | 900 | 800 | 833 |

Test 1 relates to processing granules without organic additive, test 2 - with this additive. As mentioned above, in this case the gas supply to the hearth 6 was reduced by 50% in the test 2.

General comments on results of test 1:
- Temperature increase on hearth 6 above 800°C was probably caused by non-equal gas heating distribution across the hearth area.
- Granules on hearth 5 also were heated a bit stronger due to convection, and gradually cooled down on hearth 7.

General comments on results of test 2:
- On hearths 2-5 granulate temperature was 70 - 100°C higher than during test 1. It is categorically caused by additional internal heating of the granules by combustion of organic additive, that started already on the hearth 2.
- On hearths 6-7 the temperature was as required although the gas supply to the hearth 6 was reduced by half.
- On the hearth 6 (i.e. 20 - 25 minutes after process commencement) the organic component was mostly burnt out.

The question how the claimed process influences the properties of granules becomes clear when the table of heavy metal concentration is analyzed. (Table 3).

**Table 3. Concentration of relevant heavy metals in granules before and after tests 1 and 2, metal extraction coefficients, ELUAT parameters for granules after test 2.**

| **Metal** | **Test 1 start** | **Test 1 end** | **K1** | **Test 2start** | **Test 2 end** | **K2** | **ELUAT Test 2** |
|---|---|---|---|---|---|---|---|
| Zn | 1649 | 1103 | 34 | 1700 | 990 | 44 | 0,6 |
| Cu | 453 | 348 | 24 | 484 | 314 | 35 | 0,05 |
| Pb | 209 | 30 | 86 | 230 | 35 | 85 | 0,005 |
| Cd | 3,0 | 1,1 | 66 | 3,2 | 0,8 | 75 | 0,008 |

The data set as above fully confirms the efficiency of the claimed method:
- Heating energy was saved by 16%;
- Heavy metals extraction coefficients (i.e. the ratio of extracted metal in per cents to the initial amount of this metal in granulate) increased by about 10% as compared to the reference test results, except Pb.
- For Pb this result is not significant since in both tests extraction of Pb was effective enough.
- The strong glass-ceramic matrix produced during the treatment prevented the remaining heavy metals from leaching out.
- Certain increase of initial concentrations of heavy metals in green granules in test 2 is caused by the fact that the organic additive was made from the same water purification sludge, as the processed ash. Mineral content of the dry sludge is about 50% which means that adding 15 weight % of dry sludge would increase the concentration of respective metals by 7-8%. If other organic fuels are used that contain no heavy metals, such as brown coal or dry turf, this increase would not occur.

Separate analysis of off-gases and dust streams from the furnace showed that about 90% of heavy metals are removed from the reaction zone by the gas and aerosol particles, which thereafter agglomerate on the dust particles. It once again confirms the validity of the claimed process: initiation of several chemical and physical reactions resulting in partial evaporation of heavy metals compounds from granulate and fixing the remaining metals in the glass-ceramic matrix.

The granulates receives by the claimed method can be used as fertilizers or as construction materials.

## Claims

1. Method of detoxification and inertisation of ashes containing heavy metals, especially fly ash, from incineration and gasification of municipal waste, industrial waste or sludge, by providing a mixture of
- the ashes to be treated,
- optionally a fine-grained matrix-forming material (additive 1), suitable for generating a hard, resistant and durable matrix in the final product when treated according to these steps,
- an enhancer material (additive 2) undergoing an exothermic reaction when heated, especially an organic fuel (additive 2),
- and a chlorine source (additive 3) creating free chlorine atoms when heated,
then agglomerating, pelletizing or compacting, especially granulating, said mixture and finally heating the obtained granules/pellets to a temperature above the temperature when the vapor pressure of the heavy metal chlorides exceeds 0,001 bar, especially to a temperature above 500°C, especially above 700°C.

2. Method according to claim 1, **characterized in that** a dry mix is prepared with a composition of components as follows:
- 60 - 70 wt.% of the ashes to be treated,
- 0 - 15 wt.% of the matrix-forming material (additive 1),
- 5 - 15 wt.% of the enhancer material (additive 2) and
- 0 - 10 wt.% of the chlorine source (additive 3), wherein the given wt.% are related to the weight of the dry mix,
then said dry mix is blended with additional 10 - 20 wt.% of water to form a homogenous fine-granular mass appropriate for agglomeration or compaction, especially for granulating or pelletizing.

3. Method according to claim 1 or 2, **characterized in that** the matrix forming material (additive 1) is added to the ashes in such an amount that the overall content of all matrix forming materials in the final product, e.g. alumosilicates, is below 15 wt.% of the final product.

4. Method according to one of the claims 1 to 3, **characterized in that** the matrix forming material (additive 1) contains aluminum and silicium, especially contains or consists of aluminum oxide Al₂O₃ and silicium oxide SiO₂, especially aluminum silicates or alumosilicates, natural clay and/or powder from milling of different types of construction waste, suitable for forming a ceramic matrix.

5. Method according to one of the claims 1 to 4, **characterized in that** as enhancer material or organic fuel (additive 2) low-calorific natural fuels, coal powders, sawdust, granulated water purification sludge and/or fine-milled waste containing polyvinylchloride (PVC) are used.

6. Method according to one of the claims 1 to 5, **characterized in that** as chlorine source (additive 3) metal chlorides, especially environmentally compatible metal chlorides, especially alkali metal- and/or earth alkali metal-chlorides, especially NaCl, CaCl₂, KCI or MgCl₂, are used.

7. Method according to one of the claims 1 to 6, **characterized in that** the enhancer material (additive 2) is used as chlorine source (additive 3) simultaneously, especially that a chlorine containing polymer, especially polyvinylchloride (PVC), is added as enhancer material (additive 2) and as chlorine source (additive 3).

8. Method according to one of the claims 1 to 7, **characterized in that** the ashes, the matrix-forming material (additive 1), the enhancer material (additive 2) and/or the chlorine source (additive 3) are provided as fine-grained or milled dry powders or as watery suspensions or solutions, especially with an average particle size of < 500 µm for the ashes and < 1000 µm for the additives.

9. Method according to one of the claims 1 to 8, **characterized in that** in order to obtain additional properties of the final product such as lower specific weight and/or bulk weight, lower sound permeability or enhanced sound proof properties etc., the matrix-forming material (additive 1) and/or the enhancer material (additive 2) consists of or is blended with materials increasing the porosity of the final product after thermal treatment, e.g. substances that release gases when heated etc.

10. Method according to one of the claims 1 to 9, **characterized in that** as the ashes to be treated ashes from incineration and gasification of sludge, resulting from purification of municipal or agricultural sewage streams, or from incineration of municipal and industrial waste, or mixtures thereof are used.

11. Method according to one of the claims 1 to 10, **characterized in that** the mixing step of the ashes and the additives is performed at temperatures between 15 and 50° C.

12. Method according to one of the claims 1 to 11, **characterized in that** the agglomeration step is continued until an average diameter of the granulates/pellets predetermined by the designated future applications, especially in the range of 3 to 30 mm, is reached.

13. Method according to one of the claims 1 to 12, **characterized in that** an additional drying step is introduced before the thermal treatment of the granules, especially to reduce the residual dryness to 1-5%.

14. Method according to one of the claims 1 to 13, **characterized in that** the thermal treatment step is extended until the enhancer material or organic fuel (additive 2) is completely combusted.

15. Method according to one of the claims 1 to 14, **characterized in that** the thermal treatment of the granules/pellets is effected in two stages, especially in two separate reactors, wherein the temperature in the first stage is held, especially constant, below 120°C for a certain time and that then in a second stage the temperature is raised to a temperature above 500°C, especially 700°C, and is held, especially constant, for a certain time.

16. Method according to one of the claims 1 to 15, **characterized in that** an additional cooling step is introduced after thermal treatment in order to achieve additional mechanical stability of granules.
